# EUROPÄISCHE PATENTANMELDUNG

(11) **EP 1 178 590 A2**
(43) Veröffentlichungstag der Anmeldung: **06.02.2002**
(21) Anmeldenummer: 01000333.3
(22) Anmeldetag: 01.08.2001
(51) Int. Cl.: H02K 41/035

(54) **Elektrisches Gerät mit einem Aktuator**

(30) Priorität: 04.08.2000 DE 10038209
(71) Anmelder: Philips Corporate Intellectual Property GmbH, 52064 Aachen (DE); Koninklijke Philips Electronics N.V., 5621 BA Eindhoven (NL)
(72) Erfinder: Hente, Dirk, Dr., Philips Corp.Intel.Prop., 52064, Aachen (DE)
(74) Vertreter: Volmer, Georg, Dipl.-Ing.

(57) **Zusammenfassung**

Die Erfindung betrifft ein elektrisches Gerät mit einem Aktuator, welcher wenigstens zwei Permanentmagneten (1, 1a) und wenigstens eine mittels eines Schwingarms (3) beweglich gelagerte elektrische Spule (2) aufweist, die zur Durchflutung durch die Magnetfelder der Permanentmagneten (1, 1a) vorgesehen ist, wobei der Aktuator einen Käfig (4), welcher die Spule (2) und die Permanentmagneten (1, 1a) umschließt, als geschlossenen magnetischen Rückschlusspfad aufweist.

## Beschreibung

Die Erfindung betrifft ein elektrisches Gerät mit einem Aktuator, welcher wenigstens einen Permanentmagneten und wenigstens eine mittels eines Schwingarms beweglich gelagerte elektrische Spule aufweist.

Aus der Schrift US 5,459,359 ist ein Aktuator mit einer schwingenden Spule bekannt. Er weist einen Permanentmagneten auf, dem ein ferromagnetisches Joch gegenüber liegt. Beide werden durch ein Kunstharzgehäuse zusammengehalten. Im Zwischenraum zwischen dem Magneten und dem Joch kann eine Spule parallel schwingen. Dazu ist die Spule mittels eines Arms drehbar gelagert. Die Schwingungen der Spule werden durch den in ihr fließenden Strom gesteuert und dienen zum Antrieb von Elektrogeräten.

Es ist Aufgabe der vorliegenden Erfindung, die Effizienz eines oben genannten Aktuators zu verbessern und gleichzeitig den Austritt von magnetischen Streufeldern an die Umgebung des Aktuators auf ein Minimum zu begrenzen.

Die Aufgabe wird erfindungsgemäß dadurch gelöst, dass in einem elektrischen Gerät mit einem solchen Aktuator, welcher wenigstens zwei Permanentmagnete und wenigstens eine mittels eines Schwingarms beweglich gelagerte elektrische Spule aufweist, die zur Durchflutung durch die Magnetfelder der Permanentmagneten vorgesehen ist, dieser Aktuator einen Käfig, welcher die Spule und die Permanentmagneten umschließt, als geschlossenen magnetischen Rückschlusspfad aufweist.

Die annähernd senkrechte Durchflutung der Spule in Verbindung mit dem magnetischen Rückschluss über den Eisenpfad des Käfigs erlaubt einen besonders effizienten Betrieb eines solchen Aktuators, da der Luftspalt im Magnetkrels sehr klein ausfällt.

Mit der Ausgestaltung nach Anspruch 2 wird dafür Sorge getragen, dass durch den die Spule und die Magneten umgebenden Rückschlusspfad aus einem ferromagnetischen Metall wie Weicheisen nur wenig des magnetischen Streufelds aus dem Spalt zwischen Käfig Spule und den Magneten nach außen treten kann.

Die Ausgestaltung nach Anspruch 3 erlaubt eine einfache und direkte Übertragung der oszillierenden Drehbewegung auf eine anzutreibende Vorrichtung oder Last. Es ist kein Getriebe wie bei einem Elektromotor notwendig So kann ein schwingender Rasierkopf direkt angetrieben werden. Das sorgt für einen effizienten und wartungsarmen Antrieb. Außerdem können so die Schwingungseigenschaften des Aktuators leicht variiert werden. Am einen Ende des Schwingarms ist die Spule befestigt, am anderen Ende die anzutreibende Last. Je nach Verhältnis der Abstände der Spule und der anzutreibenden Last vom Drehzapfen, lässt sich das Drehmoment des Aktuators und seine Schwingfrequenz beeinflussen.

In den Ansprüchen 4 und 5 ist eine Möglichkeit dargestellt, wie der Schwingarm dazu gebracht wird, nach beidseitigen Auslenkungen selbsttätig in die Mittellage zurückzukehren. Dazu kann um den Drehzapfen eine Torsionsfeder gewickelt werden, welche mit dem Schwingarm einerseits und dem Gehäuse des Aktuators andererseits verbunden ist. Damit ist eine permanente Rückstellkraft bei Auslenkungen des Schwingarms vorhanden. Alternativ kann der Schwingarm auch über zwei seitliche vorzugsweise an der Last befestigte Blattfedern vorgespannt werden. Damit ist eine höhere Vorspannung als mit der Torsionsfeder zu erreichen, allerdings ist der Aufbau etwas komplizierter.

Die Ausgestaltung nach Anspruch 6 erlaubt größere Amplituden des Schwingarms, ohne dass die Anordnung insgesamt mehr Platz benötigt. Dazu ist zum einen der kreissektorförmige Magnetkreis bezüglich der anzutreibenden Last oder Vorrichtung um 180° gedreht angeordnet, so dass die Last sich nun auf der Außenseite des Kreissektors befindet. Zudem ist der Schwingarm zweigeteilt, wobei beide Teile jeweils in einem Drehzapfen gelagert sind. Die Verbindung der beiden Schwingarmteile erfolgt über einen Drehzapfen, der zusätzlich in Längsrichtung in wenigstens einem der Schwingarmteile verschiebbar gelagert ist.

Die Ausgestaltung nach Anspruch 7 stellt eine Alternative zu der Lagerung des Schwingarms mit der Spule mittels Drehzapfen dar. In diesem Fall besteht der Schwingarm zumindest teilweise aus einer Blattfeder, welche von der an ihrem einen Ende befestigten Spule ausgelenkt werden kann. Eine solche Anordnung besitzt keine drehbaren Teile und ist besonders kostengünstig herzustellen.

Durch die Ausgestaltungen nach den Ansprüchen 8 und 9 wird die prinzipbedingte geringe elektromagnetische Abstrahlung durch die von einem Wechselstrom durchfloseene Spule und das magnetische Streufeld der Permanentmagnete weiter reduziert. Damit können auch zukünftige schärfere Grenzwerte problemlos eingehalten werden.

Mit der Ausgestaltung nach Anspruch 10 werden die genannten Vorteile für einen elektrischen Rasierer nutzbar gemacht, der dadurch besonders preisgünstig und robust ausgeführt werden kann.

Ausführungsbeispiele der Erfindung werden nachfolgend an Hand mehrerer Figuren näher beschrieben und erläutert. Es zeigen:
Fig. 1 einen erfindungsgemäßen Aktuator in der Draufsicht; die anzutreibende Last befindet sich hier auf der der Spule abgewandten Seite des Schwingarms,
Fig 2 einen Querschnitt von A nach A' durch den Aktuator aus Fig. 1,
Fig.2a einen Längsschnitt von C nach C' durch den Aktuator aus Fig. 1,
Fig 3 einen Aktuator, bei dem die Last von der der Spule zugewandten Seite des Schwingarms angetrieben wird,
Fig. 4 einen Aktuator mit zweigeteiltem Schwingarm und zwei Drehzapfen,
Fig 4a den Aktuator aus Fig 4 im ausgelenkten Zustand,
Fig 5 einen Aktuator, dessen Schwingarm an einer Blattfeder gelagert ist,
Fig. 6 einen Aktuator, dessen Schwingarm in einem Drehzapfen gelagert ist und über zwei Blattfedern in die Mittellage zurückgeführt wird,
Fig 7 einen Aktuator mit schräg ausgeführten Begrenzungsflächen an Spule, Käfig und Magneten,
Fig. 8 einen Äktuator, dessen Käfig eine zusätzliche Schirmwand aufweist und
Fig. 8a den Aktuator aus Fig. 8 mit einer Lücke in der zusätzlichen Schirmwand.

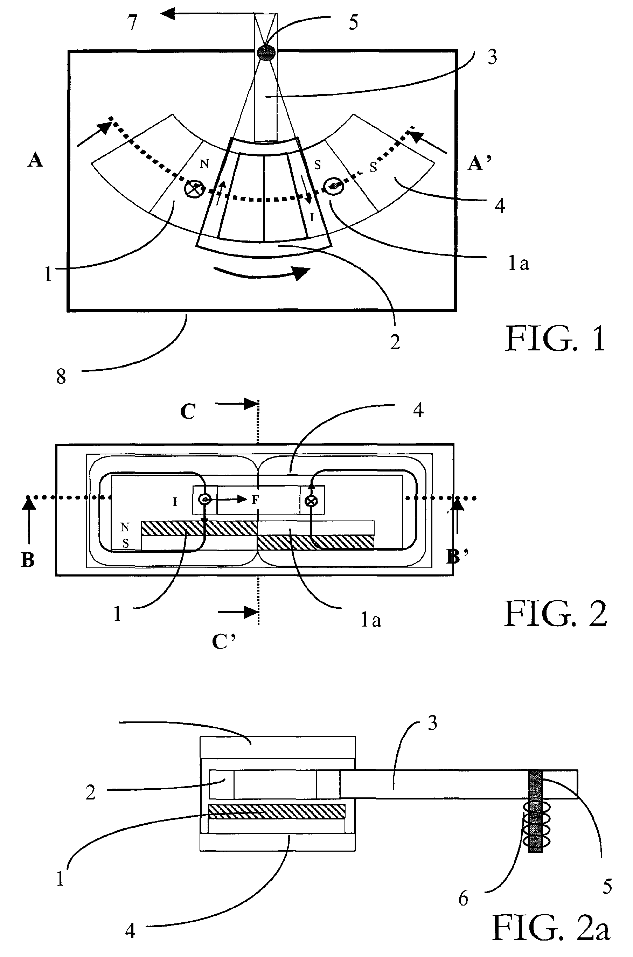

Der in Fig 1 gezeigte Aktuator besteht aus einer kreissektorförmigen Anordnung, welche aus einem Käfig 4, der an mindestens einer Seite offen ist, und zwei in seinem Inneren eingebauten Permanentmagneten 1, 1a besteht. In den Käfig 4 wird eine Spule 2 eingebracht, welche in Richtung des Kreissektors schwingen kann. Dazu ist die aus mindestens einer Windung bestehende Spule 2 an einem Schwingarm 3 drehbar in einem Drehzapfen 5 gelagert, der sich auf der Innenseite des Kreissektors außerhalb des Käfigs 4 befindet. Die Spule 2 wird im Betrieb von einem Wechselstrom durchflossen, der entweder vom Netz oder von einer Batterie bzw. einem Akku in Verbindung mit einem Wechselrichter zur Verfügung gestellt wird. Die beiden Permanentmagnete 1, 1a sind so ausgerichtet, dass ihre Magnetfelder die Windung(en) der Spule 2 senkrecht durchfluten. Die nebeneinander liegenden Permanentmagnete 1, 1a sind dabei entgegengesetzt angeordnet, so dass immer ein Nordpol an einen Südpole angrenzt. Über den Luftspalt zwischen Spule 2 und den Permanentmagneten 1, 1a und über den Luftspalt zwischen der Spule 2 und dem Dach des Käfigs 4 wird der magnetische Fluss über den Metallkäfig 4 geschlossen. Da die Luftspalte sehr schmal und damit die Magnetfelder in ihnen ziemlich homogen sind, ist dieser Antrieb sehr effektiv. Dazu trägt auch die geringe Masse der Spule 2 und des Schwingarms 3 bei. Querschnitte durch den Aktuator senkrecht zu den Magnetfeldern sind in den Fig 2 und 2a zu sehen. Der Aktuator ist in einem Gehäuse 8 untergebracht, das den Käfig 4 und die Lagerung 5 des Schwingarms 3 aufnimmt. Dieses Gehäuse 8 kann ein separates Gehäuse für den Aktuator sein, es kann sich aber auch um das Gehäuse eines elektrischen Geräts handeln. Statt in dem Gehäuse 8 kann der Aktuator auch auf einer Montageplatte montiert sein, die sich im Außengehäuse des elektrischen Geräts befindet.

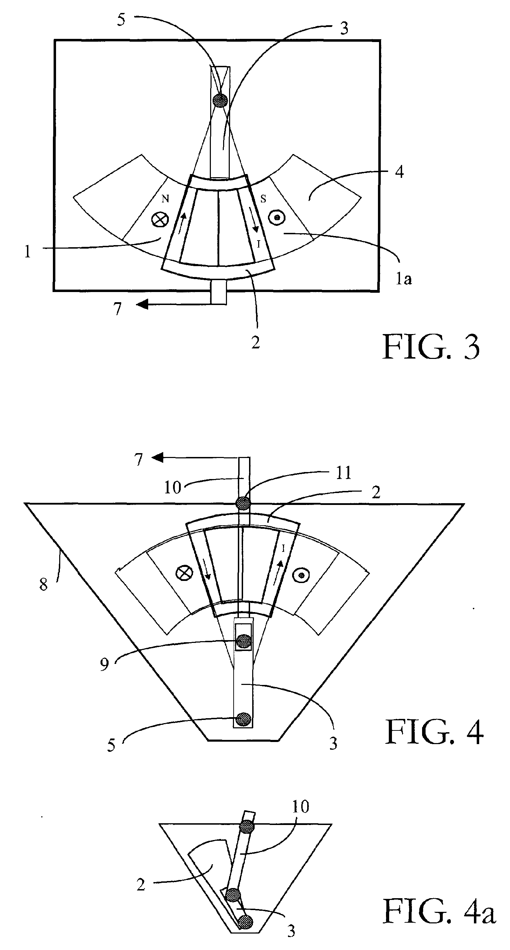

Die durch die Schwingbewegung des Aktuators anzutreibende Last 7 kann dabei wie in Fig 1 an dem der Spule 2 abgewandten Ende des Schwingarms 3 angebracht werden. Das führt zu geringen Schwingungsamplituden, aber durch die Hebelwirkung des Arms 3 zu einem hohen Drehmoment. In Fig 3 ist die anzutreibende Last 7 dagegen außerhalb des Kreissektors an der Außenseite nahe der Spule 2 angebracht. Das führt zu größeren Ausschlägen bei der Schwingbewegung an der Last 7, reduziert aber das Drehmoment.

Der in Fig. 4 gezeigte Aktuator weist zwei Schwingarme 3, 10 auf, die jeweils in einem Zapfen 5 bzw. 11 drehbar gelagert sind. Diebeiden Schwingarme 3, 10 sind außerdem in einem gemeinsamen Lager 9 drehbar und gegeneinander verschiebbar verbunden. Damit ist ein Auslenken der an dem die Last 7 nicht unmittelbar antreibenden Schwingarm 3 befestigten Spule 2 möglich. Die Anordnung ist in ausgelenktem Zustand in Fig. 4a zu sehen. Da der Käfig 4 mit den Magneten 1, 1a und der schwingenden Spule 2 zwischen den Drehzapfen 5, 11 angeordnet ist, ergibt sich in Verbindung mit einem trapezförmigen Gehäuse 8 eine besonders kompakte und platzsparende Bauweise. Außerdem ermöglicht eine solche Anordnung ein hohes Drehmoment bei geringen Auslenkungen.

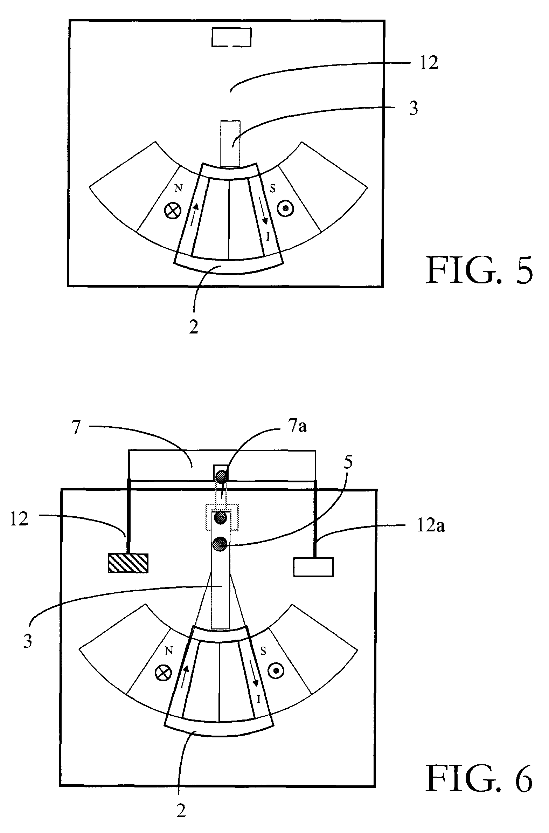

An Stelle eines in einem Drehzapfen 5 gelagerten Schwingarms 3 kann auch ein verkürzter Schwingarm 3 in Verbindung mit einer Blattfeder 12 benutzt werden. Das eine Ende der Blattfeder 12 ist dabei, wie in Fig 5 gezeigt, am Gehäuse 8 befestigt, während das andere Ende den verkürzten Schwingarm 3 oder auch direkt die Spule 2 trägt.

Die in Fig. 6 gezeigte Anordnung stellt eine Kombination aus dem in einem Drehzapfen 5 gelagerten Schwingarm 3 und der Variante mit einer Blattfeder 12 dar, allerdings kommen hier zwei Blattfedern 12, 12a zum Einsatz Die beiden Blattfedern 12, 12a greifen hierbei an der zu bewegenden Last 7 an und sind am anderen Ende jeweils über Befestigungsteile mit dem Außengehäuse 8 verbunden. Die Last 7 selbst ist mit dem Schwingarm 3 über eine Kupplung 7a verbunden. Eine solche Anordnung sorgt dafür, dass die Last 7 immer parallel zum Gehäuse 8 schwingt, was z.B. für die Anwendung in einem Rasierer interessant ist.

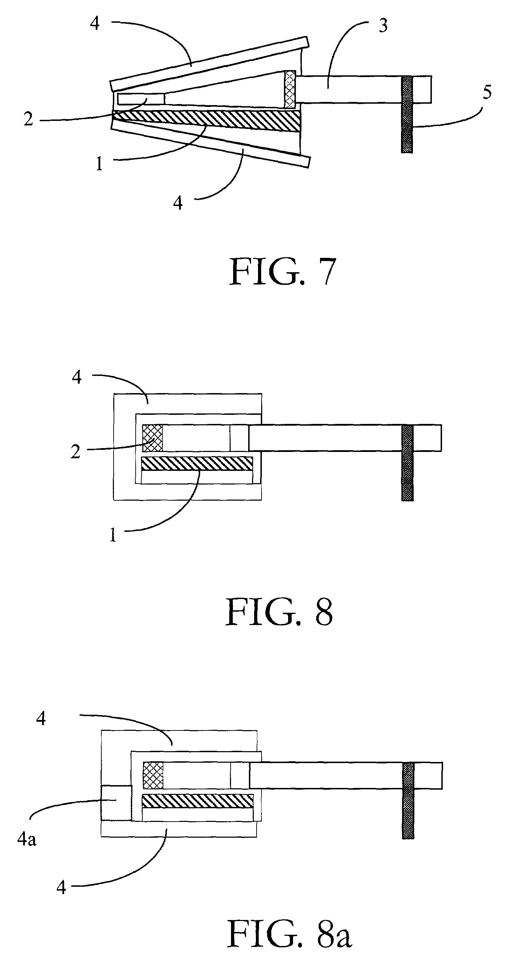

Da magnetische Streufelder austreten, ist es von Vorteil, diese durch weitere Abschirmung zu begrenzen. Dazu gibt es mehrere Möglichkeiten. Zum einen ist der Austritt magnetischer Streufelder von vornherein dadurch reduziert, dass der metallene Käfig 4 einen Austritt nur über die dünnen Spalte zwischen Spule 2, Käfig 4 und Magneten 1, 1a zulässt. Wenn der Käfig 4, die Spule 2 und die Magneten 1, 1a wie in Fig. 7 nach außen hin schräg geformt sind, verkleinert sich die Austrittsöffnung zu dieser Seite hin. Die Anordnung kann aber auch in ihrer ursprünglichen Form belassen werden, wenn der Käfig 4 nur eine Öffnung für den Schwingarm 3 aufweist. Auch dadurch wird der Austritt magnetischer Streufelder reduziert. Ein Nachteil dieser in Fig 8 dargestellten Anordnung ist aber die Reduktion des Magnetfelds im Luftspalt. Um dies zu umgehen, ist es sinnvoll, eine kleine Lücke 4a in Höhe der Magneten 1, 1a zu belassen, so dass das Magnetfeld im Luftspalt nicht unnötig reduziert wird.

Die eingesetzten Federelemente 6, 12 und 12a können mehrere Funktionen wahrnehmen. Indem sie auf die geringe bewegliche Masse des Aktuators bestehend aus Spule 2 und Schwingarmen 3, 5 abgestimmt sind, tragen sie zur Erhöhung des Wirkungsgrads bei. Dies ist besonders dann der Fall, wenn die schwingenden Massen und die Federelemente 6, 12, 12a in Resonanz arbeiten. Des weiteren können die Blattfedern 12, 12a auch als Stromzuführungen für die Spule 2 dienen, wenn sie aus einem leitfähigen Material bestehen oder mit einem solchen beschichtet sind Um Vibrationen zu vermeiden, sollte die effektive Masse der Last 7 außerdem auf die bewegliche Masse des Aktuators abgestimmt sein. Bewegt sich dann die angetriebene Last 7 wie in Fig. 1 entgegengesetzt zu der Spule 2 und dem Schwingarm 3 und befindet sich die Last 7 in der selben Ebene wie diese, so treten im Idealfall überhaupt keine Vibrationen mehr auf.

## Patentansprüche

1. Elektrisches Gerät mit einem Aktuator, welcher wenigstens zwei Permanentmagneten (1, a) und wenigstens eine mittels eines Schwingarms (3) beweglich gelagerte elektrische Spule (2) aufweist, die zur Durchflutung durch die Magnetfelder der Permanentmagneten (1, 1a) vorgesehen ist, wobei der Aktuator einen Käfig (4), welcher die Spule (2) und die Permanentmagneten (1, 1a) umschließt, als geschlossenen magnetischen Rückschlusspfad aufweist.

2. Elektrisches Gerät nach Anspruch 1,
**dadurch gekennzeichnet**
**dass** der Käfig (4) aus Weicheisen oder Stahl besteht und der Art geformt ist, dass er die magnetischen Streufelder der Magneten (1, 1a) abschirmt.

3. Elektrisches Gerät nach Anspruch 1,
**dadurch gekennzeichnet,**
**dass** der mit der Spule (2) verbundene Schwingarm (3) in einem Drehzapfen (5) gelagert ist und dass der Diehzapfen (5) auf der Innenseite der kreissektorförmigen Dauermagneten (1, 1a) angeordnet ist.

4. Elektrisches Gerät nach Anspruch 1,
**dadurch gekennzeichnet,**
**dass** der in einem Drehzapfen (5) gelagerte Schwingarm (3) mit einer Torsionsfeder (6) gegenüber einem Gehäuse (8) vorgespannt ist.

5. Elektrisches Gerät nach Anspruch 1,
**dadurch gekennzeichnet,**
**dass** der Schwingarm (3) gegenüber einem Gehäuse (8) mit wenigstens einer Blattfeder (12) vorgespannt ist.

6. Elektrisches Gerät nach Anspruch 1,
**dadurch gekennzeichnet,**
**dass** wenigstens ein zweiter Drehzapfen (11) auf der Außenseite der kreissektorförmigen Dauermagneten (1, 1a) angeordnet ist und dass wenigstens ein Drehgelenk (9) vorhanden ist, welches einen im ersten Drehzapfen (5) gelagerten ersten Schwingarm (3) und einen im zweiten Drehzapfen (11) gelagerten zweiten Schwingarm (10) drehbar und gegeneinander verschiebbar verbindet, wobei die Drehzapfen (5, 11) an einem Gehäuse (8) befestigt sind.

7. Elektrisches Gerät nach Anspruch 1,
**dadurch gekennzeichnet,**
**dass** an Stelle des Drehzapfens (5) ein Befestigungspunkt an einem Gehäuse (8) vorgesehen ist, wo der Schwingarm (3) durch eine Blattfeder (12) befestigt ist.

8. Elektrisches Gerät nach Anspruch 1,
**dadurch gekennzeichnet,**
**dass** die ursprünglich parallel zur Schwingungsebene der Spule (2) verlaufenden Begrenzungsflächen des Käfigs (4) auf der vom Drehzapfen (5) abgewandten Seite keilförmig zulaufen und die Begrenzungsflächen der Spule (2) und der Magneten (1, 1a) entsprechend angepasst sind.

9. Elektrisches Gerät nach Anspruch 1,
**dadurch gekennzeichnet,**
**dass** der Käfig (4) auf der dem Drehzapfen (5) abgewandten Seite eine Schirmwand aufweist, welche im Bereich der Magneten (1, 1a) eine Ausnehmung (4a) aufweist.

10. Elektrisches Gerät nach einem der Ansprüche 1 bis 9,
**dadurch gekennzeichnet,**
**dass** das elektrische Gerät ein elektrisch angetriebener Rasierapparat ist.
